**Europäisches Patentamt**

**European Patent Office**

**Office européen des brevets**

(19)

(11) Veröffentlichungsnummer: **0 412 462 A2**

# (12) EUROPÄISCHE PATENTANMELDUNG

(21) Anmeldenummer: **90115000.3**

(22) Anmeldetag: **04.08.90**

(51) Int. Cl.5: **G11B 31/00**, G11B 25/10, G11B 33/02, G11B 33/12

(30) Priorität: **08.08.89 DE 3926153**

(43) Veröffentlichungstag der Anmeldung:
**13.02.91 Patentblatt 91/07**

(84) Benannte Vertragsstaaten:
**AT BE CH DE DK ES FR GB IT LI LU NL SE**

(71) Anmelder: **Haberkern, Ottmar**
**Reuchlinstrasse 20**
**D-6200 Wiesbaden(DE)**

(72) Erfinder: **Haberkern, Ottmar**
**Reuchlinstrasse 20**
**D-6200 Wiesbaden(DE)**

(74) Vertreter: **Quermann, Helmut, Dipl.-Ing.**
**Postfach 6145 Gustav-Freytag-Strasse 25**
**D-6200 Wiesbaden(DE)**

(54) **Bildtongerät mit einklappbarem Flachbildschirm.**

(57) Die Erfindung schlägt ein Bildtongerät in Art eines kofferartig zusammenklappbaren Gehäuses vor, mit einem Gehäusedeckelteil (2) zur Aufnahme eines flachen Bildschirmes sowie einem Gehäusebodenteil (1) zur Aufnahme von Bedienelementen (11), einer Bildaufzeichnungs- und Bildwiedergabeeinrichtung sowie Zusatzsteckern (21) zur Verbindung mit Peripheriegeräten, wobei die beiden Gehäuseteile (1, 2) durch ein Scharnier (3) miteinander verbunden sind, das Stereolautsprecher (4a, 4b) aufnimmt, sowie das Bildtongerät zusätzlich mit einem TV-Empfangsteil/Wiedergabeteil und einer CD-Plattenabspieleinrichtung (13) versehen ist. Das erfindungsgemäße Bildtongerät ist bei universeller Verwendbarkeit, die über die Verwendung eines Bildtonrecorders hinausgeht, kompakt ausgebildet, es vereinigt damit die Funktionen eines Fernsehers, Videorecorders und CD-Plattenspielers in sich.

FIG.1

EP 0 412 462 A2

## BILDTONGERÄT MIT EINKLAPPBAREM FLACHBILDSCHIRM

Die Erfindung betrifft ein Bildtongerät in Art eines kofferartig zusammenklappbaren Gehäuses, mit einem Gehäusedeckelteil zur Aufnahme eines flachen Bildschirmes sowie einem Gehäusebodenteil zur Aufnahme von Bedienelementen, einer Bildaufzeichnungs- und Bildwiedergabeeinrichtung sowie Zusatzsteckern zur Verbindung mit Peripheriegeräten, wobei die beiden Gehäuseteile durch ein Scharnier miteinander verbunden sind, das Stereolautsprecher aufnimmt.

Ein derartiges Bildtongerät ist beispielsweise aus der EP 0 149 101 B1 bekannt. Das Gerät bezieht sich im wesentlichen auf die Funktion eines Bildtonrecorders. Demgegenüber ist es Aufgabe der Erfindung, ein Bildtongerät der genannten Art so weiter zu bilden, daß es über die Verwendung des Bildtonrecorders hinaus universell verwendbar ist, bei kompakter Bauweise des Gerätes.

Gelöst wird die Aufgabe dadurch, daß das Bildtongerät zusätzlich mit einem TV-Empfangsteil/Wiedergabeteil sowie einer CD-Plattenabspieleinrichtung versehen ist.

Das Bildtongerät vereinigt damit die Funktionen eines Fernsehers, Videorecorders und CD-Plattenspielers in sich. Das Gerät kann damit nicht nur Bild und Ton aufzeichnen und wiedergeben und die jeweiligen Bilder darstellen, sondern auch Bild und Ton empfangen und CD-Platten wiedergeben.

Im Detail sollte das Bildtongerät so ausgebildet sein, daß das Gehäusedeckelteil die Antenne für das TV-Empfangsteil aufweist. Die Antenne ist zweckmäßig als Teleskopantenne ausgebildet und stellt damit einen optimalen Kompromiß zwischen guter Empfangsleistung und geringem Bauvolumen dar. Von besonderer Bedeutung ist die Anordnung der CD-Plattenspieleinrichtung, die bevorzugt als in das Gehäusedeckelteil einsteckbares Modulelement ausgebildet ist. Bei eingesteckter CD-Plattenspieleinrichtung erfolgt deren Stromversorgung über die Batterie oder einen Netzanschluß des Tongerätes, während in entnommenem Zustand eine in der CD-Plattenspieleinrichtung angeordnete separate Batterie die Energieversorgung sicherstellt. Die CD-Plattenspieleinrichtung kann damit wahlweise als integrierter Bestandteil des Bildtongerätes oder als separate Einheit eingesetzt werden. Da die CD-Plattenspieleinrichtung über keine eigenen Lautsprecher verfügt, sollte sie einen Zusatzstecker zum Verbinden mit einem externen Lautsprecher, insbesondere einem Kopfhörer aufweisen.

Eine vorteilhafte bauliche Ausgestaltung des Bildtongerätes sieht vor, daß die CD-Plattenabspieleinrichtung im Bereich einer dem Scharnier abgewandten Ecke des Gehäusedeckelteiles auf der dem Gehäusebodenteil abgewandten Seite in das Gehäusedeckelteil einsteckbar ist. Die CD-Plattenabspieleinrichtung ist damit einfach zugänglich, das heißt sie kann einfach in das Gehäusedeckelteil eingesteckt und von diesem entnommen werden.

In den Figuren ist die Erfindung anhand einer Ausführungsform beispielsweise dargestellt, ohne auf diese beschränkt zu sein. Es stellt dar:

Figur 1 eine räumliche Ansicht des erfindungsgemäßen Bildtongerätes bei zusammengeklappter Stellung, von vorn betrachtet,

Figur 2 eine Ansicht des Bildtongerätes gemäß Figur 1, bei aufgeklappter Stellung,

Figur 3 eine Draufsicht auf das Gehäusedeckelteil und

Figur 4 eine Ansicht der CD-Plattenabspieleinrichtung, in Richtung der Pfeile X gemäß Figur 3 gesehen, mit einem an die Einrichtung angeschlossenen Kopfhörer.

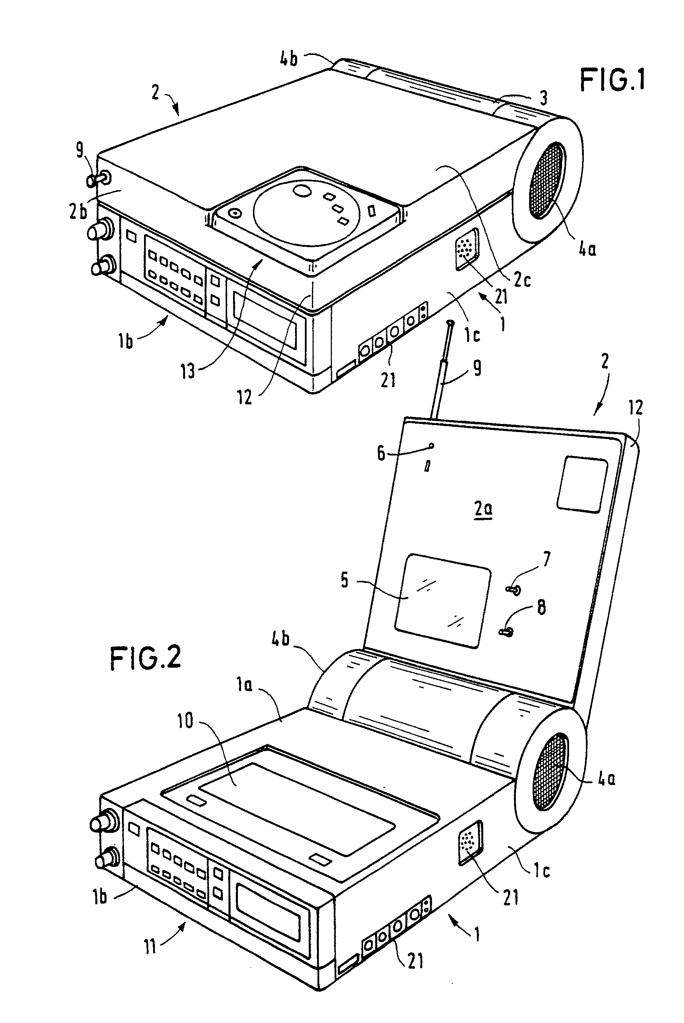

Die Figuren 1 und 2 zeigen ein Gehäusebodenteil 1 und ein Gehäusedeckelteil 2, die über ein Scharnier 3 miteinander schwenkbar verbunden sind. Im Bereich gegenüberliegender Enden weist das Scharnier 3 entgegengesetzt gerichtete Lautsprecher 4a und 4b zur Erzielung eines Stereoeffektes auf.

In die Innenfläche 2a des Gehäusedeckelteils 2 ist ein Flachbildschirm 5 integriert, das Gehäusedeckelteil 2 nimmt ferner innen ein nicht näher dargestelltes TV-Empfangsteil/Wiedergabeteil bekannter Art auf. Ein in die Innenfläche 2a integrierter Schalter 6 ermöglicht eine Umschaltung UHF/VHF, Bedientasten 7 und 8 einen automatischen Sendersuchlauf. Die Frontfläche 2b nimmt schließlich eine Teleskopantenne 9 für das TV-Empfangsteil auf.

Im Gehäusebodenteil 1 befindet sich eine Bildaufzeichnungs-und eine Bildwiedergabeeinrichtung 10, die in Art eines Cassettenrecorders ausgebildet ist, der von der Innenfläche 1a des Gehäusebodenteils 1 zugänglich ist. Die Frontfläche 1b des Gehäusebodenteils 1 dient der Aufnahme von Bedienelementen 11 für die einzelnen Komponenten des Gerätes, die Seitenfläche 1c ist mit Zusatzsteckern 21 ausgerüstet, die zur Aufnahme der externen Peripherie dienen, zum Beispiel Heimcomputer, Videospiele, Telefonanschluß, Tastatur für Videotext und BTX.

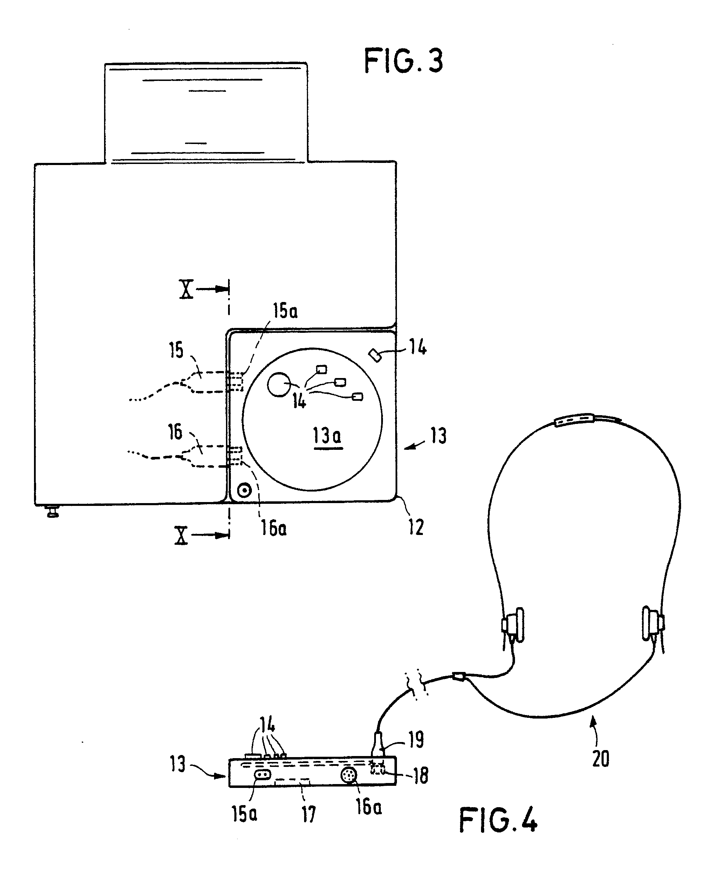

In die dem Scharnier 3 abgewandte Ecke 12 des Gehäusedeckelteils 2 ist im Bereich deren Außenfläche 2c eine CD-Plattenabspieleinrichtung 13 eingesetzt. Diese ist plattenförmig ausgebildet und weist die Form eines Quadrates auf. Gedacht ist bei dieser Einrichtung an eine solche, die dem Abspielen von CD-Singles dient. Die CD-Plattenabspieleinrichtung 13 als solche ist bekannt, die Einrichtung weist im Bereich ihrer dem Gehäusedekkelteil 2 abgewandten Fläche 13a diverse Bedienelemente für die Einrichtung auf. Die CD-Plattenabspieleinrichtung 13 ist als in das Gehäusedeckelteil 2 einsteckbares Modulelement ausgebildet, was in der Darstellung der Figuren 3 und 4 durch in das Gehäusedeckelteil 2 integrierte Stecker 15 ,und 16 für die Stromversorgung und Verbindung der CD-Plattenspieleinrichtung zu dem Restgeräteteil bzw. den Lautsprechern 4a und 4b verdeutlicht ist, die beim Einsetzen der CD-Plattenabspieleinrichtung 13 in entsprechende einrichtungsseitige Buchsen 15a und 16a einsteckbar sind. Es wird dabei für ausreichend erachtet, wenn die Verbindung der CD-Plattenabspieleinrichtung 13 mit dem Restgeräteteil ausschließlich über die Stecker-/Buchsenverbindungen erfolgt, es können natürlich zusätzlich weitere Befestigungsmittel für die CD-Plattenabspieleinrichtung 13a vorgesehen sein. Die CD-Platteneinspieleinrichtung 13 verfügt zusätzlich über eine eigene Batterie 17 sowie eine Buchse 18 zum Verbinden mit einem Anschlußstecker 19 eines Kopfhörers 20. Bei eingesetzter CD-Plattenabspieleinrichtung 13 erfolgt der Betrieb dieser Einrichtung über die nicht näher gezeigte Batterie des Gesamtgerätes oder über einen Netzanschluß des Gesamtgerätes, der Ton der Platte wird über die Lautsprecher 4a und 4b wiedergegeben. Zum separaten Betrieb der CD-Plattenabspieleinrichtung 13 wird diese aus dem Restgeräteteil entnommen und mit der Einrichtung der Kopfhörer 20 verbunden, die zum Betreiben notwendige Energie bezieht, die CD-Plattenabspieleinrichtung 13 dann über die eigene Batterie 17.

Zusätzlich kann das erfindungsgemäße Bildtongerät mit einem nicht näher gezeigten Empfangsteil für eine Infrarot-Fernbedienung versehen sein, mittels dessen die einzelnen Elemente des Gerätes ansteuerbar sind. Auch kann das erfindungsgemäße Bildtongerät zusätzlich mit einem Radioempfangsteil versehen sein.

## Ansprüche

1. Bildtongerät in Art eines kofferartig zusammenklappbaren Gehäuses, mit einem Gehäusedeckelteil (2) zur Aufnahme eines flachen Bildschirmes sowie einem Gehäusebodenteil (1) zur Aufnahme von Bedienelementen (11), einer Bildaufzeichnungs- und Bildwiedergabeeinrichtung (10) sowie Zusatzsteckern (21) zur Verbindung mit Peripheriegeräten, wobei die beiden Gehäuseteile (1, 2) durch eine Scharnier (3) miteinander verbunden sind, die Stereolautsprecher (4a, 4b) aufnehmen, **dadurch gekennzeichnet,** daß das Bildtongerät zusätzlich mit einem TV-Empfangsteil/Wiedergabeteil sowie einer CD-Plattenabspieleinrichtung (13) versehen ist.

2. Bildtongerät nach Anspruch 1, **dadurch gekennzeichnet,** daß das Gehäusedeckelteil (2) die Antenne (9) für das TV-Empfangsteil aufweist.

3. Bildtongerät nach Anspruch 2, **dadurch gekennzeichnet,** daß die Antenne als Teleskopantenne (9) ausgebildet ist.

4. Bildtongerät nach einem der Ansprüche 1 bis 3, **dadurch gekennzeichnet,** daß die CD-Plattenabspieleinrichtung (13) als in das Gehäusedeckelteil (2) einsteckbares Modulelement ausgebildet ist.

5. Bildtongerät nach Anspruch 4, **dadurch gekennzeichnet,** daß die CD-Plattenabspieleinrichtung (13) im Bereich einer dem Scharnier (3) abgewandten Ecke (12) des Gehäusedeckelteils (2) auf der dem Gehäusebodenteil (1) abgewandten Seite (2c) des Gehäusedeckelteils (2) einsteckbar ist.

6. Bildtongerät nach Anspruch 4 oder 5, **dadurch gekennzeichnet,** daß die CD-Plattenabspieleinrichtung (13) eine eigene Batterie (17) und einen Zusatzstecker (18) für einen externen Lautsprecher, insbesondere einen Kopfhörer (20) aufweist.

FIG.1

FIG.2

FIG.3

FIG.4